(19) **Europäisches Patentamt** / **European Patent Office** / **Office européen des brevets**

(11) **EP 2 983 802 B1**

(12) **FASCICULE DE BREVET EUROPEEN**

(45) Date de publication et mention de la délivrance du brevet:
**08.01.2020 Bulletin 2020/02**

(21) Numéro de dépôt: **14720661.9**

(22) Date de dépôt: **04.04.2014**

(51) Int Cl.:
*G06F 3/046* (2006.01)          *A63F 13/00* (2014.01)
*A63F 3/00* (2006.01)          *A63F 13/2145* (2014.01)
*A63F 13/28* (2014.01)          *A63F 13/98* (2014.01)
*A63F 9/24* (2006.01)

(86) Numéro de dépôt international:
**PCT/FR2014/050820**

(87) Numéro de publication internationale:
**WO 2014/167229 (16.10.2014 Gazette 2014/42)**

(54) **DISPOSITIF ET SYSTÈME POUR GÉNÉRER ET ASSERVIR UNE FORCE DE DÉPLACEMENT D'UN ÉLÉMENT MOBILE LOCALISÉ EN TEMPS RÉEL**

VORRICHTUNG UND SYSTEM ZUR ERZEUGUNG UND AUTOMATISCHEN STEUERUNG EINER KRAFT ZUM BEWEGEN EINES IN ECHTZEIT GEORTETEN BEWEGLICHEN ELEMENTS

DEVICE AND SYSTEM FOR GENERATING AND AUTOMATICALLY CONTROLLING A FORCE FOR MOVING A MOVEABLE ELEMENT LOCATED IN REAL TIME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.04.2013 FR 1353137**

(43) Date de publication de la demande:
**17.02.2016 Bulletin 2016/07**

(73) Titulaire: **Starbreeze Paris**
**75008 Paris (FR)**

(72) Inventeurs:
• **CHABIN, Laurent**
 **F-92600 Asnieres Sur Seine (FR)**

• **LEFEVRE, Valentin**
 **F-92800 Puteaux (FR)**
• **DUTEIL, Christophe**
 **F-75006 Paris (FR)**

(74) Mandataire: **Santarelli**
 **49, avenue des Champs-Elysées**
 **75008 Paris (FR)**

(56) Documents cités:
**WO-A1-2012/028827     GB-A- 2 427 529**
**US-A1- 2004 164 696     US-A1- 2008 238 885**
**US-A1- 2011 076 916     US-A1- 2012 302 128**

**Description**

La présente invention concerne les interfaces entre un utilisateur et un système informatique, notamment dans le domaine des jeux, et plus particulièrement un dispositif et un système pour générer et asservir une force de déplacement d'un élément mobile localisé en temps réel.

Dans de nombreuses situations, il peut être nécessaire de déplacer un ou plusieurs éléments mobiles, de façon manuelle ou automatique, en liaison avec un système informatique, ce dernier étant, de préférence, capable de détecter la position et/ou l'orientation de ces éléments mobiles.

Ainsi, par exemple, dans un jeu mettant en œuvre des figurines sur un plateau de jeu, permettant à un utilisateur de jouer contre un joueur virtuel simulé par un système informatique, l'application mise en œuvre sur le système informatique doit connaître la position de toutes les figurines du plateau de jeu, notamment celles déplacées par l'utilisateur, pour calculer son coup et permettre d'effectuer ou d'indiquer des déplacements de figurines.

Il existe des solutions pour détecter la position et/ou l'orientation d'objets réels sur un plateau de jeu permettant d'utiliser ces objets comme interface d'un système informatique.

Ainsi, par exemple, des écrans tactiles de type résistif peuvent être utilisés comme plateau de jeu afin de détecter la position d'un objet tel qu'un stylet lorsqu'une pression suffisante est appliquée. Cependant, ce type d'écran ne supporte en général qu'un seul contact et nécessite une pression constante de l'utilisateur pour connaître la position. En d'autres termes, il n'est pas possible de détecter la position du stylet si la pression exercée par ce dernier est relâchée.

Il est également possible d'utiliser des écrans tactiles de type capacitif, basés sur le principe d'une fuite de courant via un corps conducteur. Cependant, seuls des objets conducteurs et reliés à une masse permettent la détection de leur position. Ainsi, par exemple, les positions d'objets en plastique ou en bois ne peuvent être déterminées à l'aide de tels écrans.

De façon générale, les solutions à base d'écran tactile, ou de film tactile, ne supportent qu'un nombre limité de contacts simultanés ou quasi-simultanés et ne permettent pas la détermination d'un nombre important d'objets.

D'autres solutions mettent en œuvre des technologies à base d'infrarouge, notamment sous forme de tables. Ainsi, par exemple, les produits connus sous les noms de *Surface* (*Surface* est une marque de Microsoft), de *mTouch* (*mTouch* est une marque de Merel Technologies) et d'*Entertaible* (*Entertaible* est une marque de Philips) utilisent des caméras infrarouges disposées dans l'épaisseur de la table. Cependant, l'épaisseur imposée de ces tables les rend encombrantes, peu mobiles et leur confère une certaine rigidité. En outre, leur prix ne permet pas réellement un usage familial.

Enfin une autre solution développée par le Demandeur permet un interfaçage en temps réel d'une pluralité d'éléments mobiles avec un système informatique. Après avoir sélectionné au moins un module de localisation intégré à un élément mobile, ce module de localisation est activé de façon séquentielle. Un signal est alors reçu de ce module de localisation activé et une information de position de l'élément mobile comprenant ce module de localisation activé est calculée en temps réel à partir du signal reçu. Les modules de localisation sont activés de façon séquentielle, un seul module de localisation étant activé à un instant donné.

Par ailleurs, il existe des solutions pour déplacer automatiquement des éléments mobiles d'une première position à une seconde position. A ces fins, les éléments mobiles sont typiquement pourvus de capteurs et de moteurs actionnant des roues. Il est observé ici que l'utilisation de moteurs pour actionner des roues engendre une certaine précision des mouvements. Les capteurs n'ont donc pas besoin d'être très précis.

Pour contrôler le déplacement de ces éléments mobiles, des régulateurs de type PID (sigle de *proportionnel intégral dérivé*) peuvent être utilisés. Il est rappelé qu'un régulateur PID permet de calculer en temps réel un écart entre une trajectoire réelle d'un objet mobile et une trajectoire souhaitée afin d'adapter une commande d'actuateurs pour modifier la direction de l'objet en conséquence. Ces calculs sont généralement effectués plusieurs fois par seconde.

Cependant, si de telles solutions peuvent être satisfaisantes dans certaines conditions, elles présentent néanmoins de nombreux inconvénients. En effet, elles sont notamment souvent couteuses à mettre en œuvre et présentent des faiblesses mécaniques liées à l'usure et à l'encrassement du mécanisme (par exemple des pneus, des engrenages et des axes de roulement).

La demande de brevet US 2004/164696 décrit un robot mobile comprenant un capteur d'images, des moyens pour calculer sa position à partir d'images acquises et des moyens pour recevoir, par radio, des ordres de commande pour ses moteurs. La position du robot est déterminée par ce dernier, par analyse d'images (par comparaison de portions d'images acquises avec des motifs prédéterminés).

La demande de brevet US 2011/076916 décrit un robot qui peut se déplacer grâce à un vibreur interne qui transmet des vibrations à des pattes latérales, sans asservissement de trajectoire couplant un capteur de position et d'orientation à des moyens de déplacement.

La demande de brevet US 2008/238885 décrit un système de détection et de localisation d'objets (dépourvus de moyens de déplacement) sur une surface.

La demande de brevet WO 2012/028827 décrit un système de détection et de localisation d'éléments mobiles (dépourvus de moyens de déplacement) sur une surface.

L'invention permet de résoudre au moins un des problèmes exposés précédemment. L'invention est définie dans la revendication indépendante 1. Les aspects supplémentaires de l'invention sont définis dans les revendications dépendantes. L'expression "mode de réalisation" ne se rapporte qu'à des combinaisons de caractéristiques telles que définies dans les revendications. Dans la présente spécification, quand l'expression "mode de réalisation" se réfère à des combinaisons de caractéristiques qui ne sont pas revendiquées, ladite expression doit alors être interprétée comme se rapportant plutôt à des exemples de la présente invention.

L'invention a ainsi pour objet un dispositif pour générer et asservir une force de déplacement d'un élément mobile dont la position et l'orientation sont déterminées en temps réel, ce dispositif comprenant les moyens suivants,

- moyens pour générer au moins une force de déplacement, lesdits moyens pour générer au moins une force de déplacement pouvant être contrôlés pour générer une force selon plusieurs directions différentes ;
- moyens de réception d'un signal radioélectrique ;
- moyens d'émission d'un signal électromagnétique, ledit signal électromagnétique étant émis en réponse à un signal d'activation et permettant la localisation en temps réel d'un élément mobile comprenant ledit dispositif ;
- moyens de contrôle connectés auxdits moyens de réception et auxdits moyens d'émission d'un signal électromagnétique, lesdits moyens de contrôle étant configurés pour

  ○ commander lesdits moyens pour générer au moins une force de déplacement en réponse à une information de commande d'un signal radioélectrique reçu et
  ○ générer un signal d'activation en réponse à une information de synchronisation d'un signal radioélectrique reçu.

Du fait de sa structure ne faisant pas appel à des éléments de roulement, la fiabilité du dispositif selon l'invention est améliorée (absence d'usure de roues, de pneus et d'éléments d'entraînement tels que des engrenages et absence d'encrassement des axes de roues). En outre, l'absence d'éléments d'entraînement tels que des engrenages permet de limiter les bruits émis lors de déplacements du dispositif.

Selon un mode de réalisation particulier, lesdits moyens pour générer au moins une force de déplacement comprennent des éléments mécaniques de type vibreur. L'invention peut ainsi être mise en œuvre en faisant appel à des éléments produits en masse et dont le prix de revient est très faible. En outre, un tel mode de déplacement confère un aspect irréel et magique aux déplacements.

Lesdits éléments mécaniques peuvent notamment comprendre au moins un moteur et au moins une masselotte désaxée entraînée, de façon directe ou indirecte, par ledit au moins un moteur. Le dispositif peut en outre comprendre au moins une butée élastique et/ou mobile, ladite au moins une butée étant montée de telle sorte à ce qu'elle soit percutée par ladite au moins une masselotte à chaque révolution de ladite au moins une masselotte.

Selon un mode de réalisation particulier, ledit au moins un moteur a un arbre de rotation sensiblement perpendiculaire à un plan de déplacement dudit dispositif.

Toujours selon un mode de réalisation particulier, le dispositif comprend deux ou quatre éléments mécaniques de type vibreur.

Toujours selon un mode de réalisation particulier, lesdits moyens de réception d'un signal radioélectrique comprennent une mémoire double-port, ladite mémoire double-port étant configurée pour être accessible en lecture et/ou en écriture par un signal radioélectrique et par lesdits moyens de contrôle.

Toujours selon un mode de réalisation particulier, lesdits moyens de réception d'un signal radioélectrique comprennent des moyens d'identification d'une information de synchronisation et/ou d'une information de commande à partir d'un signal radioélectrique reçu et des moyens de transmission d'une information de synchronisation et/ou d'une information de commande identifiées auxdits moyens de contrôle.

Selon un mode de réalisation particulier, lesdits moyens de contrôle comprennent des moyens d'accès à une valeur mémorisée dans ladite mémoire double-port, une information de synchronisation et/ou de commande étant identifiée en fonction d'une valeur mémorisée dans ladite mémoire double-port.

Lesdits moyens de réception d'un signal radioélectrique sont, par exemple, conformes à un standard de type RFID.

L'invention a également pour objet un système pour asservir une force de déplacement d'un élément mobile dont la position et l'orientation sont déterminées en temps réel, ce système comprenant les moyens suivants :

- au moins un élément mobile comprenant un dispositif comme décrit précédemment pour générer et asservir une force de déplacement d'un élément mobile ; et
- une surface de captation comprenant :

  ○ des moyens de pilotage de détection de position pour activer séquentiellement des émissions électromagnétiques d'éléments mobiles ;
  ○ des moyens de localisation d'un signal électromagnétique ; et
  ○ des moyens de pilotage de commande pour émettre des informations de commande permettant de contrôler lesdits moyens pour générer au moins une force de déplacement dudit dispositif dudit au moins un élément mobile.

Du fait de la structure de l'élément mobile ne faisant pas appel à des éléments de roulement, la fiabilité du système selon l'invention est améliorée (absence d'usure de roues, de pneus et d'éléments d'entraînement tels que des engrenages et absence d'encrassement des axes de roues). En outre, l'absence d'éléments d'entraînement tels que des engrenages permet de limiter les bruits émis lors de déplacements du dispositif.

Selon un mode de réalisation particulier, ladite au moins une force de déplacement dudit dispositif dudit au moins un élément mobile est déterminée en réponse à des informations de localisation dudit au moins un élément mobile déterminées par lesdits moyens de localisation.

Toujours selon un mode de réalisation particulier, lesdits moyens de pilotage de commande comprennent des moyens pour calculer une erreur entre une trajectoire réelle dudit au moins un élément mobile et une trajectoire désirée dudit au moins un élément mobile.

Lesdits moyens de pilotage de commande comprennent, par exemple, un régulateur de type PID.

D'autres avantages, buts et caractéristiques de la présente invention ressortent de la description détaillée qui suit, faite à titre d'exemple non limitatif, au regard des dessins annexés dans lesquels :

- la figure 1 illustre schématiquement un exemple d'architecture pouvant être utilisée pour mettre en œuvre l'invention ;
- la figure 2 illustre un exemple de surface de détection et de logique associée pour déterminer la position et l'orientation d'un élément mobile ;
- la figure 3 illustre schématiquement le principe physique de couplage inductif entre un solénoïde et une boucle conductrice d'une surface de détection ;
- la figure 4 illustre schématiquement un mécanisme d'interpolation permettant de calculer la position d'un solénoïde placé sur une surface de détection, selon un axe donné, à partir des mesures obtenues par un système tel que celui décrit en référence à la figure 2 ;
- la figure 5 illustre un exemple particulier de circuits électroniques d'élément mobile, permettant leur localisation ;
- la figure 6, comprenant les figures 6a et 6b, illustre deux exemples d'architecture d'un élément mobile comprenant un tag de localisation et de commande ainsi que des éléments mécaniques de type vibreur ;
- la figure 7 illustre un exemple de trajectoire suivie par un élément mobile sur une surface de captation;
- la figure 8 illustre schématiquement certaines étapes mises en œuvre par un module logiciel d'un système informatique relié à la surface de captation pour commander une force de déplacement d'un élément mobile ; et
- la figure 9, comprenant les figures 9a à 9c, représente un élément mécanique de type vibreur pouvant être intégrée à un élément mobile et comprenant un moteur, une masselotte désaxée entraînée par le moteur et une butée verticale élastique et/ou mobile.

De façon générale, l'invention a pour objet un élément mobile dont la position (abscisse, ordonnée et/ou altitude) et/ou l'orientation (cap, tangage et/ou roulis) peuvent être déterminées par une surface de détection et comprenant des éléments mécaniques, de préférence de type vibreur, activables de façon indépendante. La surface de détection est capable de déterminer séquentiellement la position et/ou l'orientation d'un ensemble d'éléments mobiles.

A ces fins, chaque élément mobile est ici pourvu d'au moins un module d'activation capable de recevoir un signal d'activation et un signal de commande, un module de localisation et un module pour générer des forces de déplacement. Le module de localisation est contrôlé, de façon directe ou indirecte, par un signal d'activation reçu par le module d'activation. De même, le module pour générer des forces de déplacement est contrôlé, de façon directe ou indirecte, par un signal de commande reçu par le module d'activation. Il est d'ores et déjà observé qu'un signal d'activation peut être un signal de commande.

La position peut être une position bidimensionnelle, dans un plan, ou une position tridimensionnelle comprenant une altitude (ou élévation). La surface de détection peut être combinée à un écran pour fournir, par exemple, des éléments de décor ou des informations.

A titre d'illustration, la captation des positions tridimensionnelles d'éléments mobiles peut s'effectuer par champ électromagnétique. A ces fins, une surface de détection de positions des éléments mobiles, composée d'un maillage de type ligne/colonne de captation électromagnétique, est utilisée. Elle est associée à un module électronique capable de calculer, par démultiplexage, la position d'un module de localisation émettant un champ électromagnétique.

Chaque module de localisation est donc sélectionné de façon séquentielle, par exemple selon un identifiant qui lui est propre, afin qu'il émette un champ électromagnétique. A ces fins, chaque module de localisation comprend un mécanisme d'activation de telle sorte que, lorsqu'il est activé, il émette un champ électromagnétique pouvant être capté par la surface de détection.

Un module de pilotage de détection de position est associé à la surface de détection afin d'activer séquentiellement les émissions électromagnétiques des modules de localisation via un signal d'activation ou contrôler une telle activation séquentielle. Le signal d'activation entre ce module et les modules de localisation est avantageusement transmis via des connexions sans fil.

Le signal d'activation peut viser chaque module de localisation de façon sélective, par exemple selon leurs identifiants, ou un ensemble de modules de localisation qui sont alors activés séquentiellement selon des mécanismes de retard intégrés à ces derniers, permettant une activation après un délai prédéterminé suivant la réception d'un signal d'activation.

Par ailleurs, un module de pilotage de commande est associé à la surface de détection afin d'émettre un signal permettant de contrôler un module pour générer des forces de déplacement d'un ou de plusieurs éléments mécaniques, de préférence de type vibreur, appartenant à l'élément mobile. Le destinataire d'un signal de commande peut être précisé dans le signal de commande lui-même. Ainsi, un signal de commande peut notamment comprendre un identifiant d'élément mobile, un identifiant d'un module de localisation et/ou un identifiant d'un élément mécanique, de préférence de type vibreur, d'un élément mobile.

Le module de pilotage de commande peut être intégré au module de pilotage de détection de position. De façon simplifiée, ce module utilise la position et l'orientation d'un élément mobile pour contrôler des éléments mécaniques, de préférence de type vibreur, intégrés dans cet élément mobile (en contrôlant par exemple un sens et une vitesse de rotation de moteurs intégrés à ces éléments mécaniques).

L'orientation de l'élément mobile peut notamment être obtenue par l'utilisation de plusieurs modules de localisation dans l'élément mobile. Ces données de position et d'orientation permettent de réaliser un asservissement de position (contrôle de trajectoire) en utilisant, par exemple, une boucle de rétroaction d'un régulateur de type PID.

Selon un mode de réalisation particulier, l'électronique d'activation, de localisation et de commande des éléments mobiles est au moins partiellement alimentée électriquement par induction, l'antenne utilisée pour capter l'énergie étant également utilisée pour activer et synchroniser l'élément mobile, c'est-à-dire permettre une communication entre la surface de localisation et un élément mobile. L'alimentation par induction, mettant en œuvre un couplage inductif, peut utiliser des circuits de contrôle spécifiques ou des circuits standard, par exemple des circuits conformes aux standards RFID (sigle de *Radio Frequency IDentification* en terminologie anglosaxonne) ou aux recommandations QI (développées par le consortium « *Wireless Power Consortium*») tels que les circuits portant les références BQ500110 et BQ5101x développés par la société Texas Instruments.

Toujours selon un mode de réalisation particulier, l'électronique d'activation, de localisation et de commande des éléments mobiles est au moins partiellement alimentée électriquement par une source électrique telle qu'une pile ou une batterie. Une telle batterie peut être au moins partiellement chargée par induction, en particulier par induction à l'aide de l'antenne utilisée pour activer et synchroniser l'élément mobile. Comme décrit précédemment, l'alimentation par induction, mettant en œuvre un couplage inductif, peut utiliser des circuits de contrôle spécifiques ou des circuits standards, par exemple des circuits conformes aux standards RFID ou aux recommandations QI.

Il est observé ici que lorsque l'électronique d'activation et de localisation est alimentée par pile ou batterie, elle peut utiliser un simple récepteur radio.

La surface de détection des positions est, par exemple, une carte de type PCB (sigle de *Printed Circuit Board* en terminologie anglo-saxonne) de réception électromagnétique, souple ou rigide. Elle peut être associée à un écran, également souple ou rigide, tactile ou non tactile, par exemple un écran de type LCD (sigle de *Liquid Crystal Display* en terminologie anglo-saxonne) ou OLED (acronyme *d'Organic Light-Emitting Diode* en terminologie anglo-saxonne) permettant de faire évoluer les éléments mobiles sur une surface visuelle interactive. La surface de détection peut également être associée à une surface aimantée permettant de faire évoluer les éléments mobiles sur un plan incliné, vertical ou inversé (tête en bas) ou soumis à des chocs, sans altérer la détection de position.

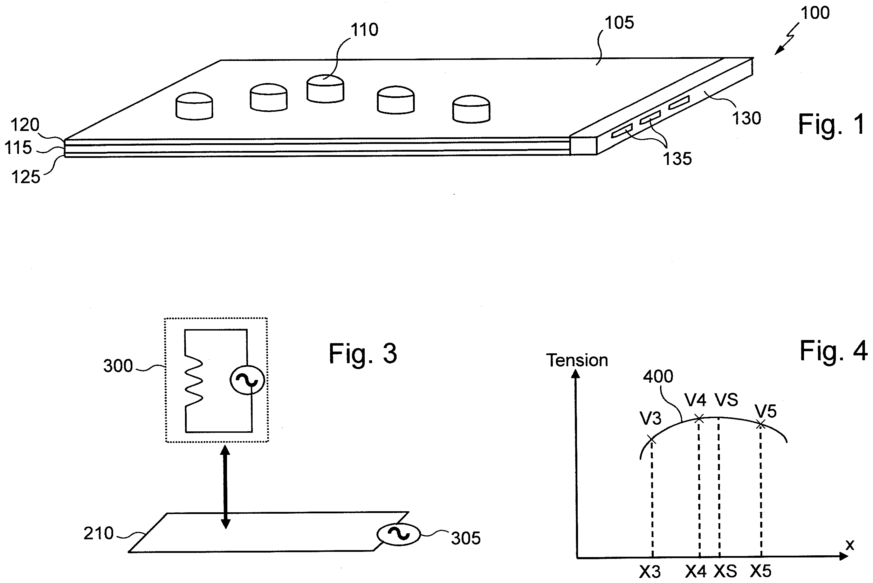

La figure 1 illustre schématiquement un exemple d'architecture 100 pouvant être utilisée pour mettre en œuvre l'invention.

L'architecture 100 comprend ici un plateau 105, par exemple un plateau de jeu, sur lequel sont disposés des éléments mobiles 110 permettant à un utilisateur d'interagir avec un système informatique associé à ce plateau en déplaçant les éléments mobiles 110, ces derniers pouvant également être déplacés de façon autonome. Bien que seulement cinq éléments mobiles soient ici représentés, il est possible d'en utiliser plusieurs dizaines, voire plusieurs centaines. Le plateau 105 définit la zone de détection de position et/ou d'orientation des éléments mobiles mis en œuvre.

Le plateau 105 comprend ici une surface de détection 115 couplée à un écran 120 et une surface aimantée 125 (la surface de détection 115, l'écran 120 et la surface aimantée 125 sont ici sensiblement parallèles). Il comprend également un module matériel 130 (ou système de traitement central) pour détecter la position et, si nécessaire, l'orientation des éléments mobiles 110 ainsi que pour mettre en œuvre une ou plusieurs applications avec lesquelles interagit l'utilisateur et contrôler le déplacement d'éléments mobiles.

Le module matériel 130 est notamment en charge de gérer les détections des positions et/ou orientations des éléments mobiles, c'est-à-dire identifier les modules de localisation les uns à la suite des autres, les activer pour qu'ils émettent, chacun leur tour, un champ électromagnétique, évaluer leurs positions et calculer des commandes pour contrôler le déplacement des éléments mobiles.

Le module matériel 130 est, de préférence, inséré dans une coque avec les autres éléments du plateau 105. Alternativement, il peut s'agir d'un module déporté intégré, par exemple, à un ordinateur ou une console de jeu. Il peut être alimenté électriquement par batterie rechargeable ou via un adaptateur secteur et présente un ensemble de connexions classiques 135, par exemple une prise électrique pour adaptateur secteur, des ports USB, Ethernet, vidéo VGA (sigle de *Video Graphics Array* en terminologie anglo-saxonne) et/ou HDMI (sigle de *High Definition Multimedia In* en terminologie anglo-saxonne), le cas échéant, notamment si un écran est associé à la zone de détection. Il comprend en outre, de préférence, un module de communication sans fil, par exemple un module de communication sans fil de type WIFI ou Bluetooth permettant d'interagir avec un autre système informatique et/ou d'accéder à des données via un réseau de communication.

Le module matériel 130 comprend typiquement un module de calcul, un module de pilotage de détection et de capture de position et un module de pilotage de commande détaillés ci-après. Le module de calcul est ici pourvu d'une unité centrale de traitement (CPU, sigle de *Central Processing Unit* en terminologie anglo-saxonne), une unité de traitement graphique (GPU, sigle de Graphic Processing Unit en terminologie anglo-saxonne), des composants mémoires (RAM, sigle de *Random Access Memory* en terminologie anglo-saxonne, ROM, sigle de *Read Only Memory* en terminologie anglo-saxonne et/ou de type Flash) pour stocker les programmes et les variables nécessaires à la mise en œuvre de l'invention ainsi qu'un module de traitement du son, sous forme, par exemple, d'un chipset.

Selon un mode de réalisation particulier, le module matériel 130 n'est pas intégré au plateau 105 mais est relié à lui. Il s'agit par exemple d'un ordinateur portable de type PC ou d'un dispositif tel qu'un téléphone intelligent (*smartphone*) ou une tablette connecté au plateau 105.

Le module de pilotage de détection et de capture de position active séquentiellement, de préférence par radio, chaque module de localisation dont la position doit être déterminée ou contrôle une telle activation séquentielle. Après activation, chaque module de localisation émet ici un champ électromagnétique capté par la surface de détection. Cette dernière transmet alors au module de détection et de capture de position des informations permettant de calculer la position d'un module de localisation, par exemple de type (x, y, z). Comme décrit ci-après, lorsque plusieurs modules de localisation sont associés à un même élément mobile, il est possible, à partir des positions de ces modules de localisation, de déterminer des paramètres d'orientation de cet élément mobile, par exemple sous forme d'angles. Les positions et/ou orientation de tous les éléments mobiles dont la position et/ou l'orientation doivent être déterminées sont alors transmises au module de calcul qui les utilise pour gérer l'interactivité avec l'application considérée.

Le plateau 105 et l'électronique associée sont, dans la suite de la description, appelés la surface de captation.

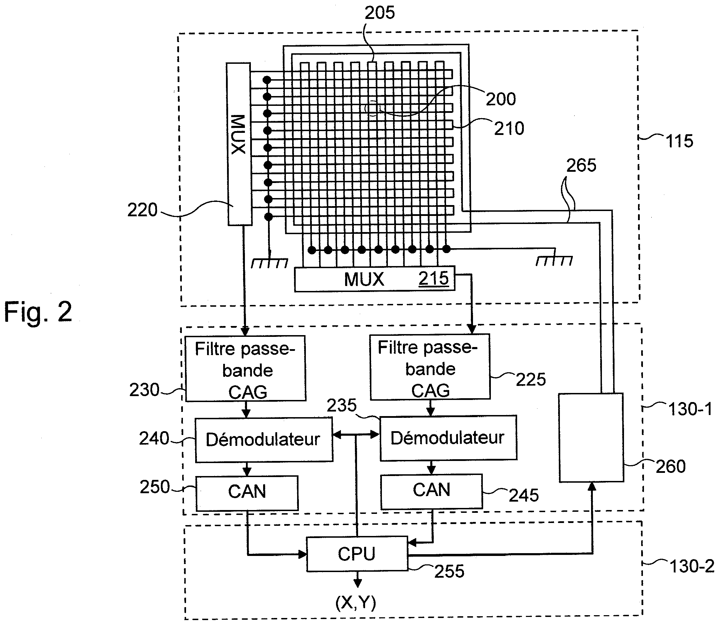

La figure 2 illustre un exemple de surface de détection et de logique associée.

La surface de détection 115 est ici constituée d'un maillage sous forme de lignes et de colonnes constituant une grille conductrice. Cette dernière comprend un ensemble de boucles conductrices suivant deux axes orthogonaux. Chaque boucle est un capteur discret permettant de mesurer l'intensité du courant ou la tension induite par un élément rayonnant, typiquement un solénoïde appartenant à un élément mobile dont la position et/ou l'orientation doivent être calculées, qui est positionné sur la surface de détection.

A titre d'illustration, il est admis ici qu'un solénoïde est placé à la position 200, c'est-à-dire à l'intersection des boucles 205 et 210 dont une extrémité est reliée à une masse et l'autre extrémité est reliée aux composants électroniques utilisés pour calculer une position. Lorsque le solénoïde situé à la position 200 est alimenté, il génère un courant inductif dans les boucles 205 et 210 qui peut être analysé et comparé au courant induit dans les autres boucles. Il est ainsi possible, par couplage inductif entre le solénoïde et la grille et par mesure du courant induit, de déterminer la position du solénoïde.

Des multiplexeurs 215 et 220 sont reliés à chaque boucle de chacun des deux axes de la grille, c'est-à-dire ici à chacune des boucles verticales et horizontales, respectivement. Les sorties des multiplexeurs 215 et 220 sont connectées aux contrôleurs automatiques de gain (CAG) 225 et 230, respectivement, du module de pilotage de détection et de capture de position, référencé ici 130-1, du module matériel 130. Les signaux de sortie des contrôleurs automatiques de gain 225 et 230 sont tout d'abord démodulés dans les démodulateurs 235 et 240, respectivement. La démodulation produit un signal continu (DC, sigle de *Direct Current* en terminologie anglo-saxonne) proportionnel à la sinusoïde originale complétée de composantes alternatives (AC, sigle d'*Alternating Current* en terminologie anglo-saxonne) multiples de la fréquence fixe émise par le solénoïde.

Selon un schéma couramment mis en œuvre, le module de calcul, référencé ici 130-2, du module matériel 130 pilote les multiplexeurs 215 et 220 afin d'activer séquentiellement les boucles, c'est-à-dire d'activer une boucle n+1 après une boucle n. Lorsque la dernière boucle est atteinte, le processeur initie un nouveau cycle et pilote l'activation de la première boucle.

Un filtre passe-bande est avantageusement mis en œuvre dans chaque contrôleur automatique de gain 225 et 230 pour supprimer les harmoniques indésirables du signal démodulé ainsi que le bruit de fond électromagnétique. Ce filtrage permet d'affiner les mesures des signaux issus des multiplexeurs 215 et 220, qui sont démodulés dans les démodulateurs 235 et 240 puis numérisés dans les convertisseurs analogique/numérique (CAN) 245 et 250, respectivement.

Les valeurs numériques obtenues sont transmises à l'unité centrale de traitement (CPU) 255 du module de calcul 130-2 pour être mémorisées. Comme illustré, l'unité centrale de traitement 255 contrôle les démodulateurs 235 et 240.

Après que les valeurs aient été mémorisées, l'unité centrale de traitement incrémente l'adresse des multiplexeurs afin de procéder à la numérisation des signaux provenant des boucles suivantes. Lorsqu'une dernière boucle est atteinte, l'unité centrale de traitement réinitialise l'adresse du multiplexeur correspondant à la valeur de la première boucle de l'axe considéré.

A la fin d'un cycle, l'unité centrale de traitement a mémorisé, pour chaque axe, autant de valeurs numériques qu'il y a de boucles adjacentes proches de la position du solénoïde. A partir de ces valeurs, l'unité centrale de traitement calcule la position du solénoïde par interpolation comme décrit ci-après.

Il est observé ici que la mise à la masse des boucles peut être assurée par des bandes de métal positionnées entre les différentes boucles afin de les protéger des interférences électromagnétiques. Une alternative consiste à disposer un plan de masse uniforme sous la grille conductrice.

Par ailleurs, le module de pilotage de détection et de capture de position 130-1, comprenant ici le module de pilotage de commande, intègre un émetteur 260, commandé par l'unité centrale de traitement 255 du module de calcul 130-2, permettant d'activer un module de localisation d'un élément mobile.

A titre d'illustration, l'unité centrale de traitement 255 transmet à l'émetteur 260 un identifiant d'un module de localisation à activer. Cet identifiant est codé puis transmis sous forme de signal radio numérique ou analogique. Chaque module de localisation recevant ce signal peut alors comparer l'identifiant reçu avec son propre identifiant et s'activer si les identifiants sont identiques. Alternativement, l'unité centrale de traitement 255 transmet à l'émetteur 260 un signal d'activation générale qui est codée puis transmise sous forme de signal radio numérique ou analogique.

De façon similaire, l'unité centrale de traitement 255 transmet à l'émetteur 260 au moins un identifiant d'élément mobile, de module de localisation et/ou d'élément mécanique, de préférence de type vibreur, avec une commande de contrôle de module pour générer des forces de déplacement d'un ou de plusieurs éléments mécaniques, de préférence de type vibreur. Ce ou ces identifiants ainsi que cette commande sont, de préférence, codés puis transmis sous forme de signal radio numérique ou analogique. Chaque module de localisation recevant ce signal peut alors déterminer, à partir du ou des identifiants reçus, si la commande reçu le concerne.

L'émetteur 260 est relié à une antenne 265 permettant la transmission de signaux d'activation et de commande utilisés ici par les éléments mobiles comme source d'énergie, pour activer les modules de localisation et pour générer des forces de déplacement d'un ou de plusieurs éléments mécaniques, de préférence de type vibreur. L'antenne 265 est avantageusement placée sur la surface de détection 115, par exemple autour des boucles 205 et 210. Selon un mode de réalisation particulier, les boucles 205 et 210 peuvent également être utilisées pour former l'antenne 265. A ces fins, un commutateur est utilisé pour déterminer la fonction d'émission ou de réception des boucles 205 et 210 (ces dernières sont alors, en fonction de la position du commutateur, reliées aux multiplexeurs 215 et 220 ou à l'émetteur 260).

Comme décrit ci-dessous, l'émetteur 260 peut notamment comprendre un lecteur de type RFID.

Ainsi, pour estimer la position d'un ensemble de module de localisation, il est nécessaire d'activer séquentiellement chaque module de localisation et, pour chacune de ces activations, selon le mode de réalisation décrit ici, effectuer un cycle sur chaque ensemble de boucles.

Plusieurs surfaces de détection peuvent être combinées les unes avec les autres, la superficie de la surface de détection résultante étant la somme des superficies des surfaces de détection combinées. A ces fins, une surface de détection est considérée comme maître, les autres étant considérées comme esclaves. L'activation séquentielle des éléments mobiles est gérée par la surface de détection maître qui reçoit, de préférence, les positions calculées par les modules matériels associés à chaque surface de détection esclave et les consolide en élaborant un tableau contenant les coordonnées et angles de liberté des modules de localisation.

La figure 3 illustre schématiquement le principe physique de couplage inductif entre un solénoïde et une boucle conductrice d'une surface de détection.

Chaque élément mobile dont la position et/ou l'orientation doivent être calculées comprend au moins un solénoïde dont l'axe est, de préférence, orientée vers la surface de détection.

Le solénoïde 300 est parcouru par un courant alternatif et émet un champ électromagnétique qui se propage vers la surface de détection, notamment, dans cet exemple, vers la boucle 210. La boucle 210, recevant un champ électromagnétique issu du solénoïde 300, se couple avec le solénoïde 300. Il est alors possible de mesurer un signal alternatif aux bornes de cette boucle, référencées 305.

Le couplage entre le solénoïde 300 et la boucle 210 peut s'exprimer sous la forme de la relation suivante,

$$R = \frac{k}{D^2} E$$

où

E désigne la tension aux bornes du solénoïde 300, R désigne la tension du signal reçu aux bornes 305 de la boucle de réception 210, D est la distance entre le solénoïde 300 et la boucle de réception 210 et k est une constante liée à des facteurs intrinsèques du système comprenant le solénoïde et la boucle de réception, notamment le nombre de spires du solénoïde et la taille de la boucle.

La figure 4 illustre schématiquement un mécanisme d'interpolation permettant de calculer la position d'un solénoïde placé sur une surface de détection, selon un axe donné, à partir de mesures obtenues par un système tel que celui décrit en référence à la figure 2.

Il est supposé ici que le solénoïde se situe à proximité de boucles verticales B3, B4 et B5, positionnées selon des abscisses X3, X4 et X5, les tensions mesurées aux bornes de ces boucles étant notées V3, V4 et V5, respectivement. Le solénoïde se trouve ici a une position, en abscisse, notée XS.

Les coordonnées X3, X4 et X5 peuvent être obtenues par l'unité centrale de traitement à partir d'un identifiant de la boucle correspondante (ces valeurs sont prédéfinies selon le schéma de routage de la surface de détection et, de préférence, mémorisées dans une mémoire non volatile).

La portion de courbe 400 représentée sur la figure 4 illustre la variation de tension pour la position XS du solénoïde selon les positions des boucles couplées avec le solénoïde, extrapolée à partir des valeurs mesurées par les boucles B3, B4 et B5. Elle peut être assimilée à une fonction du second degré de type parabolique. Cette approximation locale correspond, en pratique, au phénomène de couplage électromagnétique entre un solénoïde et des boucles d'une grille conductrice.

Les relations suivantes illustrent cette propriété.

$$V3 = a(X3 - XS)^2 + b$$

$$V4 = a(X4 - XS)^2 + b$$

$$V5 = a(X5 - XS)^2 + b$$

où a et b sont des constantes, a étant une constante inférieure à zéro (a<0).

Par ailleurs, compte tenu de l'hypothèse d'une fonction du second degré, les relations entre les abscisses X3, X4 et X5 peuvent s'exprimer sous la forme suivante,

$$X4 - X3 = X5 - X4 = \Delta X$$

$$X5 - X3 = 2\Delta X$$

($\Delta X$ représentant la distance entre les abscisses X3 et X4 et entre les abscisses X4 et X5).

Ainsi, il est possible d'interpoler la position du solénoïde selon la formule suivante :

$$XS = X3 + \frac{\Delta X}{2} \frac{3V3 - 4V4 + V5}{V3 - 2V4 + V5}$$

Il est également possible, selon la même logique, de déterminer la position du solénoïde selon l'axe des ordonnées.

En outre, la distance entre le solénoïde et la boucle (c'est à dire l'altitude du solénoïde par rapport à la surface de détection) peut être définie selon la relation suivante,

$$D = \sqrt{\frac{k}{R} E}$$

La distance D est donc fonction de la valeur R représentant la tension aux bornes des boucles considérées de la surface de détection. Elle peut être extrapolée à partir des mesures réalisées. Il est noté que la précision de ce calcul de distance est notamment liée à la stabilité du signal E émis par le solénoïde dont la valeur doit être aussi constante que possible au cours du temps, ce qui nécessite une alimentation stabilisée dans le module de localisation qui ne doit pas chuter lors de la décharge de la batterie. Ceci peut être assuré par un régulateur de tension du module de localisation.

Comme indiqué précédemment, l'électronique d'activation, de localisation et de commande des éléments mobiles peut être alimentée électriquement par induction, l'antenne utilisée pour capter l'énergie étant également utilisée pour activer, synchroniser et commander l'élément mobile. Selon un mode de réalisation particulier, l'alimentation des modules de localisation et de commande des éléments mobiles est réalisée par un module de télé-alimentation d'un circuit de type RFID. L'utilisation d'une technologie de type RFID peut ainsi être utilisée pour alimenter et activer des modules de localisation ainsi que pour alimenter et contrôler des modules pour générer des forces de déplacement d'un ou de plusieurs éléments mécaniques, de préférence de type vibreur.

A ces fins, l'émetteur 260 représenté sur la figure 2 (ou plus généralement le module de pilotage de détection de position et le module de pilotage de commande) utilise un lecteur de type lecteur RFID permettant un mode de communication et de synchronisation du module de localisation via la technologie RFID. Les communications peuvent alors être réalisées par écritures et lectures dans une mémoire non volatile d'un circuit de type RFID embarqué dans les éléments mobiles. De telles mémoires sont avantageusement accessibles par la surface de captation par des accès de type RFID ainsi que par des microcontrôleurs embarqués dans les éléments mobiles par des liaisons électriques directes. Une synchronisation peut notamment être réalisée par une modulation spécifique de l'amplitude de la porteuse RFID.

Ainsi, selon un mode de réalisation particulier, l'électronique de la surface de captation comprend un lecteur de type RFID, c'est-à-dire un système permettant d'accéder en lecture et écriture à des composants de type RFID, ou tags RFID, situés à proximité de la surface de captation. Cette électronique comprend ici au moins une bobine conductrice couvrant tout ou une partie de la surface de captation, utilisée comme antenne émettrice/réceptrice RFID.

La puissance magnétique moyenne émise par l'antenne RFID de la surface de captation est d'un niveau tel qu'elle permet de télé-alimenter par induction magnétique l'électronique des éléments mobiles situés à proximité immédiate de l'antenne RFID.

Il est observé ici que le lecteur RFID et les éléments mobiles peuvent exploiter une des nombreuses normes RFID et leurs dérivées telles que les normes ISO/IEC 15693, ISO 18000-3, ISO 18000-4, ISO 18000-7, ISO/IEC 14443, ISO/IEC 18092 (plus connue sous le nom de NFC, sigle de *Near Field Communication* en terminologie anglo-saxonne), ISO/IEC 21481 (également connue sous le nom de NFC).

L'unité centrale de traitement utilisée pour contrôler la surface de captation, par exemple l'unité centrale de traitement 255, est également utilisée ici pour contrôler le lecteur RFID. Elle peut aussi contrôler temporellement l'activation et la désactivation de la production du champ électromagnétique de télé-alimentation en phase avec un cycle de durée $T_1$ d'un signal commun de synchronisation.

Selon un mode de réalisation particulier, au moins certains des éléments mobiles contiennent une mémoire double-port non volatile. Cette dernière est ici accessible aussi bien par un lecteur de type RFID, via une communication sans fil, que par un microcontrôleur local, via une liaison filaire, par exemple une liaison conforme au standard de bus I$^2$C (sigle d'*Inter Integrated Circuit* en terminologie anglo-saxonne). Alors que cette mémoire double-port peut être utilisée pour déclencher l'activation d'un élément mobile et donc permettre sa localisation, elle peut également être utilisée à d'autres fins en offrant un moyen de communication particulier entre un élément mobile et la surface de captation, notamment pour contrôler un module pour générer des forces de déplacement d'un ou de plusieurs éléments mécaniques, de préférence de type vibreur.

De façon avantageuse, la mémoire double-port d'un élément mobile est accessible en lecture et en écriture par le lecteur de type RFID de la surface de captation. Elle forme un moyen de communication entre la logique de la surface de captation et un microcontrôleur embarqué dans un élément mobile. Le microcontrôleur est, de préférence, alerté de chaque requête de lecture et d'écriture reçue via le protocole de communication sans fil. Suite à la réception d'une indication de réception d'une requête, le microcontrôleur peut interroger cette mémoire pour déterminer si une telle requête lui est destinée, le type d'accès (accès en écriture ou en lecture) et l'adresse mémoire visée par la requête d'accès.

Par ailleurs, chaque élément mobile contient en mémoire non volatile un identifiant unique stocké, par exemple, sur 64 bits. Selon un mode de réalisation particulier, cet identifiant unique est celui connu sous le nom d'UID (sigle d'*Unique IDentifier* en terminologie anglo-saxonne) d'un composant électronique accessible à l'aide d'un lecteur de type RFID. Un tel identifiant peut notamment être conforme à une norme telle que les normes ISO 15693, ISO 18000-3 et ISO14443. Ainsi, un lecteur de type RFID permet au système informatique lié à la surface de captation de détecter l'arrivée de nouveaux éléments mobiles et de les identifier de façon unique par leur identifiant.

Comme décrit ci-après, la logique associée à la surface de captation peut déterminer et allouer une valeur de temporisation à chaque module de localisation détecté. Une valeur de temporisation représente ici une période de temps après laquelle un module de localisation doit émettre un signal de localisation suite à la détection d'un signal de synchronisation. La valeur de temporisation allouée à un module de localisation nouvellement détecté peut être une valeur de temporisation libre (précédemment alloué à un module de localisation qui n'est plus détecté).

A ces fins, le lecteur de type RFID peut adresser la valeur de temporisation déterminée à une mémoire double-port d'un module de localisation dans une requête en écriture. A titre d'illustration, un système informatique associé à la surface de captation peut interroger une base de données, locale ou distante, avec l'identifiant du module de localisation comme clé d'accès. Une telle base de données permet avantageusement d'obtenir la liste des caractéristiques fonctionnelles de l'élément mobile. Ainsi, par exemple, cette base de données peut être utilisée pour déterminer si l'élément mobile comprenant le module de localisation considéré dispose de moteurs, d'actuateurs, de dispositifs d'affichage, de dispositifs de production de sons, de capteurs et/ou d'interrupteurs. La liste des fonctionnalités obtenue peut notamment être utilisée pour déterminer la nature d'échanges de commandes et de données possibles entre le système informatique et l'élément mobile.

La mémoire double-port et la mémoire non volatile utilisée pour stocker un identifiant de module de localisation sont, de préférence, intégrées avec un module de télé-alimentation au sein d'un même composant. De tels composants sont disponibles. Ainsi, par exemple, la société ST Micro Electronics fabrique un composant sous la référence M24LR16E qui offre des fonctions de mémoire double-port, de récupération d'énergie et d'interfaçage sans fil.

Dans un élément mobile, un tel circuit est avantageusement relié à un microcontrôleur par un bus de type I2C.

Par ailleurs, chaque élément mobile comprend un ou plusieurs circuits oscillants ainsi qu'au moins un commutateur pour permettre l'émission de signaux de localisation. Le commutateur est avantageusement contrôlé par le microcontrôleur qui déclenche ainsi l'oscillation ou l'arrêt de l'oscillation permettant la localisation du module de localisation correspondant. Il est observé ici que l'utilisation de deux circuits oscillants permet de localiser un élément mobile et d'en déterminer l'orientation. Un seul circuit oscillant peut être utilisée si, seule, la position de l'élément mobile doit être déterminée. Alternativement, plus de deux circuits oscillants peuvent être utilisés, notamment pour améliorer l'estimation de la position et/ou l'orientation de l'élément mobile.

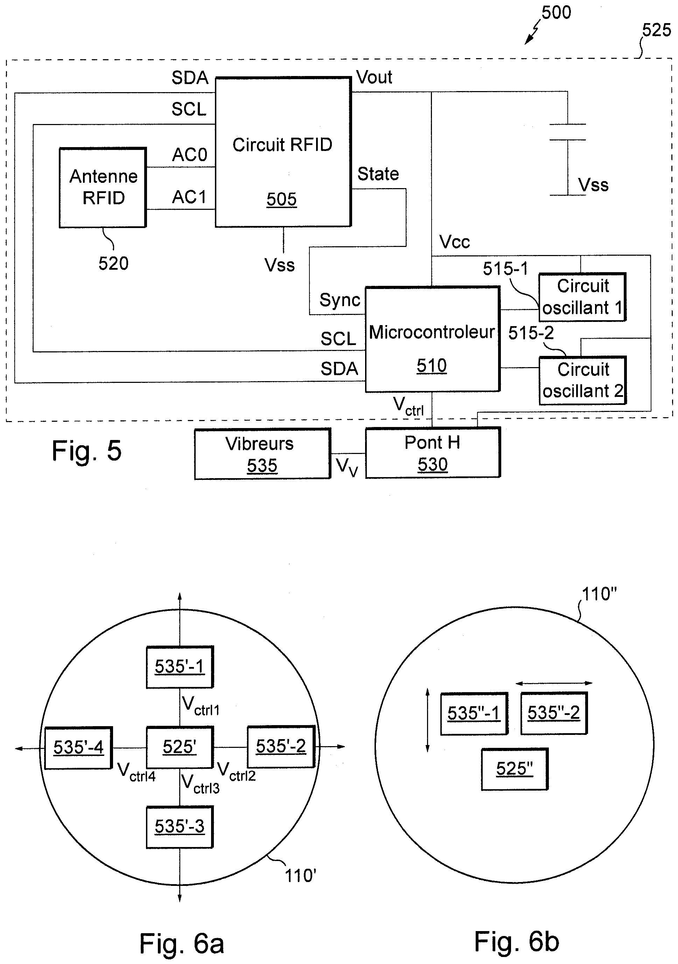

La figure 5 illustre un exemple particulier d'un circuit électronique 500 d'un élément mobile. Comme illustré, le circuit 500 comprend un composant standard 505 offrant des fonctions de type RFID et intégrant une mémoire double-port, appelé composant (ou *chip* en terminologie anglo-saxonne) RFID, un microcontrôleur 510 et deux circuits oscillants 515-1 et 515-2, génériquement référencés 515. Le circuit 500 comprend également une antenne 520 de type RFID adaptée aux caractéristiques du circuit 505. L'antenne 520 est typiquement une bobine reliée au circuit 505 via deux liens appelés *AC0* et *AC1* (pour *antenna coils* en terminologie anglo-saxonne).

Selon ce mode de réalisation, deux circuits oscillants sont mis en œuvre, de façon séquentielle, pour permettre de déterminer la position et l'orientation de l'élément mobile. En d'autres termes, l'élément mobile comprend ici deux modules de localisation, ces modules de localisation ayant une partie commune (comprenant essentiellement le circuit RFID, l'antenne RFID et le microcontrôleur) et des parties distinctes (comprenant essentiellement les circuits oscillants).

Le circuit RFID 505 est ici connecté au microcontrôleur 510 par un bus de type I2C comprenant un lien série pour un signal d'horloge appelé *SCL* (pour *Serial CLock* en terminologie anglo-saxonne) et un lien série pour transmettre des données appelé *SDA* (pour *Serial Data* en terminologie anglo-saxonne). La borne d'alimentation électrique du microcontrôleur 510, notée ici *Vcc,* comme celle des circuits oscillants 515-1 et 515-2, est connectée à la borne du circuit RFID 505 délivrant une tension, notée ici *Vout.* De façon classique, la borne du circuit RFID 505 délivrant une tension est reliée à une borne de référence notée *Vss* par une capacité permettant d'absorber des pics électriques.

Par ailleurs, le signal de synchronisation du microcontrôleur, utilisé pour contrôler le déclenchement ou l'arrêt de l'oscillation (permettant la localisation de l'élément mobile), est connecté à une borne d'état du circuit RFID, notée ici *state.*

Le circuit RFID 505 étant relié à l'antenne RFID 520, il peut recevoir de l'énergie électrique en provenance d'un lecteur RFID et échanger des données avec le lecteur, selon des requêtes en lecture et en écriture, notamment pour mettre à jour sa mémoire. La sortie *Vout* du circuit RFID 505 étant reliée aux bornes d'alimentation *Vcc* du microcontrôleur 510 et des circuits oscillants 515-1 et 515-2, ces circuits peuvent être alimentés électriquement et utilisés.

Selon un exemple particulier, la borne d'état *state* du circuit RFID 505 indique, par un premier état logique, par exemple la valeur 1, que le circuit RFID reçoit et traite une requête en lecture ou en écriture ou, plus généralement, qu'il effectue une tâche prédéterminée. Dans le cas contraire, la borne d'état *state* du circuit RFID 505 est dans un second état logique, par exemple la valeur 0. Ainsi, du fait de la connexion de la borne de synchronisation du microcontrôleur 510 à la borne d'état *state* du circuit RFID 505, l'un des circuits oscillants 515-1 ou 515-2 peut être activé par le microcontrôleur 510, de façon immédiate ou différée, selon un état du circuit RFID 505. En d'autres termes, une oscillation et donc une émission électromagnétique est déclenchée (après un délai prédéterminé pouvant être nul) lorsque la borne d'état *state* du circuit RFID 505 est dans le premier état logique et arrêtée (également après un délai prédéterminé pouvant être nul) lorsque la borne d'état *state* du circuit RFID 505 est dans le second état logique. En d'autres termes, le circuit RFID 505 est en charge de contrôler le déclenchement ou l'arrêt de l'oscillation (permettant la localisation de l'élément mobile).

Il est observé ici que l'activation des circuits oscillants peut, par exemple, être effectuée de façon séquentielle selon un décalage de temps prédéterminé (l'un des circuits oscillants peut être activé après un premier retard prédéterminé suivant le signal de synchronisation et l'autre circuit oscillant peut être activé après un second retard prédéterminé suivant le signal de synchronisation).

L'ensemble des circuits 505 à 520 et de leurs connexions forme un tag de localisation et de commande 525

Par ailleurs, le microcontrôleur 510 est connecté, via un circuit 530 de réception de commandes et de contrôle d'éléments mécaniques, à un module 535 pour générer des forces de déplacement. Comme décrit ci-après, le module 535 comprend typiquement 2 ou 4 éléments mécaniques, de préférence de type vibreur. Selon le mode de réalisation décrit, le circuit 530 de réception de commandes et de contrôle d'éléments mécaniques comprend un pont en H qui reçoit un signal de commande *Vctrl* de type PWM (sigle de *Pulse Width Modulation* en terminologie anglo-saxonne) et l'alimentation électrique *Vcc.* Comme illustré, la sortie du circuit 530 de réception de commandes et de contrôle d'éléments mécaniques est une alimentation électrique variable *Vv* qui contrôle le module 535 (chaque élément mécanique étant ici contrôlé par une alimentation électrique variable distincte, c'est-à-dire par un pont en H propre). Le circuit 530 de réception de commandes et de contrôle d'éléments mécaniques permet ainsi, en particulier, de contrôler un sens et une vitesse de rotation d'un moteur.

Les éléments mécaniques du module 535 comprennent, par exemple, un moteur et une masselotte montée de façon excentrée sur l'arbre du moteur (ou sur un arbre commandé par le moteur) afin de permettre, lors de la rotation du moteur, la génération d'une force dans un plan perpendiculaire à l'axe de rotation. Le sens de rotation de moteur peut, de préférence, être commandé. Un tel élément permet typiquement de générer une accélération de 1G pour un moteur de moins d'un gramme.

De façon avantageuse, une butée verticale élastique et/ou mobile est placée sur le chemin de la masselotte de telle sorte qu'elle soit percutée par cette dernière à chaque révolution. La force instantanée produite au moment des impacts de la masselotte sur la butée verticale permet de générer une force de déplacement dans une direction particulière.

Ces éléments mécaniques peuvent également être basés sur la technologie piézo-électrique, le quartz piézo fournissant des vibrations et, par incidence, une force de déplacement.

Selon un autre mode de réalisation, deux roulettes affleurant la surface inférieure, de préférence glissante, de l'élément mobile sont utilisées. Ces roulettes, commandées de façon distincte, sont avantageusement alignées sur un même axe formant une diagonale de l'élément mobile et à égale distance de son centre. Il est ainsi possible de faire tourner l'élément mobile sur lui-même (en commandant les roulettes dans des sens différents) et le faire suivre une trajectoire quelconque. Chacune de ces roulettes peut être contrôlée par un moteur lui-même contrôlé par un circuit comprenant un pont en H comme décrit ci-dessus. Plus de deux roulettes peuvent être utilisées.

Selon un autre mode de réalisation, la synchronisation du microcontrôleur est réalisée par la sortie *Vout* du circuit RFID. Ainsi, lorsque le lecteur RFID fournit de l'énergie à l'élément mobile, la sortie *Vout* du circuit RFID fournit une tension de contrôle qui se retrouve à l'entrée *Sync* du microcontrôleur. Cette tension de contrôle représente un premier état logique. Inversement, lorsque la sortie *Vout* passe en haute impédance lorsque le lecteur RFID ne fournit plus d'énergie à l'élément mobile, l'état de l'entrée *Sync* du microcontrôleur passe à 0 Volts grâce à une résistance de rappel à la masse et à une diode qui empêche le retour de courant, représentant un second état logique. Les premier et second états logiques permettent la synchronisation du microcontrôleur. Selon ce mode de réalisation, il est à la charge du logiciel s'exécutant sur le lecteur RFID de générer un signal de télé-alimentation et d'activer ce signal lorsque l'on souhaite synchroniser les microcontrôleurs des éléments mobiles.

Selon un autre mode de réalisation encore, la synchronisation du microcontrôleur se fait via la lecture, par exemple sur un bus I2C, d'un bit de synchronisation dont le changement d'état permet d'activer la synchronisation. Un tel bit de synchronisation a avantageusement une adresse prédéterminée.

Il est à la charge du logiciel s'exécutant sur le lecteur RFID de générer le changement d'état du bit de synchronisation dans la mémoire du circuit RFID.

Chaque élément mobile comprend ici au moins un solénoïde associé à un condensateur, en parallèle, pour former au moins un circuit oscillant en charge d'émettre un signal de localisation. Ce circuit oscillant est ici stimulé par un microcontrôleur embarqué dans l'élément mobile.

Selon un mode de réalisation particulier, le microcontrôleur situé dans l'élément mobile stimule un circuit oscillant par une de ses sorties configurée pour générer un signal cyclique modulé en largeur d'impulsion et à une fréquence proche de la fréquence propre du circuit oscillant. Le contrôle du rapport cyclique a pour effet de moduler la puissance émise par le module de localisation.

Les microcontrôleurs récents possèdent des circuits permettant de générer des signaux modulés en largeur d'impulsion. L'utilisation de cette fonctionnalité matérielle permet au microcontrôleur d'exécuter librement des instructions de code logiciel pendant la génération du signal. Ainsi, le microcontrôleur peut implémenter d'autres fonctions et réaliser des calculs sans perturber le cadencement du signal modulé en largeur d'impulsion.

Il est observé ici que la modulation de la puissance émise par des circuits oscillants des modules de localisation permet d'encoder un train binaire correspondant à des données à transférer vers un système informatique lié à la surface de localisation. Connaissant l'amplitude A1 correspondant à l'état bas et l'amplitude *A2* correspondant à l'état haut d'un signal de localisation, il est possible d'utiliser une modulation de type NRZ (sigle de *Non Return to Zero* en terminologie anglo-saxonne) qui permet à la surface de captation de discriminer les variations d'amplitude associées à un transfert de données, de celles qui sont dues à toutes les causes qui peuvent produire une variation relativement lente de la puissance reçue (comprenant notamment la variation de la distance entre l'élément mobile et la surface de captation ainsi que la variation de la tension d'alimentation de l'élément mobile).

Alors que l'activation d'un module de localisation peut être effectuée avec un circuit RFID tel que celui illustré sur la figure 5, il existe d'autres solutions. En particulier, comme décrit précédemment, l'activation d'un module de localisation peut être liée à la comparaison d'un identifiant reçu dans un signal d'activation avec un identifiant mémorisé dans le module de localisation ou en lien avec celui-ci.

La figure 6, comprenant les figures 6a et 6b, illustre deux exemples d'architecture d'un élément mobile comprenant un tag de localisation et de commande ainsi que des éléments mécaniques de type vibreur.

Plus précisément, la figure 6a représente un élément mobile 110' comprenant un tag de localisation et de commande 525' ainsi que quatre éléments mécaniques de type vibreur référencés 535'-1 à 535'-4.

Afin que le centre de gravité de l'élément mobile 110' soit proche de son centre géométrique, les éléments mécaniques 535'-1 à 535'-4 sont ici uniformément répartis sur sa périphérie, le tag de localisation et de commande 525" étant positionné à proximité de son centre géométrique. Par ailleurs, les éléments mécaniques 535'-1 à 535'-4 sont reliés au tag de localisation et de commande 525' via les alimentations électriques variables *Vctrl1* à *Vctrl4,* respectivement.

Chaque élément mécanique peut générer une force de déplacement dans au moins une direction.

Ainsi, par exemple, comme illustré sur la figure 6a, l'élément mécanique 535'-1 peut, lorsqu'il reçoit un courant électrique, exercer une force de déplacement vers le haut. De même, les éléments mécaniques 535'-2 à 535'-4 peuvent générer des forces de déplacement à droite, en bas et vers la gauche, respectivement, lorsqu'ils reçoivent un courant électrique.

Naturellement, selon la nature de ces éléments mécaniques, les directions des forces de déplacement créées peuvent être différentes. Il est également possible de configurer ces éléments mécaniques pour qu'ils puissent générer des forces de déplacement dans deux directions ou plus.

La figure 6b représente un élément mobile 110" comprenant un tag de localisation et de commande 525" ainsi que seulement deux éléments mécaniques de type vibreur référencés 535"-1 et 535"-2.

Dans cette configuration, pour que le centre de gravité de l'élément mobile 110" soit proche de son centre géométrique, les éléments mécaniques 535"-1 et 535"-2 sont placés à proximité de son centre géométrique, comme le tag de localisation et de commande 525". A nouveau, les éléments mécaniques 535"-1 et 535"-2 sont reliés au tag de localisation et de commande 525" via les alimentations électriques variables *Vctrl1* à *Vctrl2* (non représentées).

Chaque élément mécanique peut générer une force de déplacement dans au moins deux directions.

Ainsi, par exemple, comme illustré sur la figure 6b, l'élément mécanique 535"-1 peut, lorsqu'il reçoit un courant électrique, exercer une force de déplacement vers le haut ou vers le bas tandis que l'élément mécanique 535"-2 peut, lorsqu'il reçoit un courant électrique, exercer une force de déplacement vers la gauche ou vers la droite. Le changement de direction d'une force de déplacement générée par un élément mécanique peut, par exemple, être obtenu par changement du sens de rotation d'un moteur.

Naturellement, selon la nature de ces éléments mécaniques, les directions des forces de déplacement créées peuvent être différentes. Il est également possible de configurer ces éléments mécaniques pour qu'ils puissent générer des forces de déplacement dans plus de deux directions.

Comme décrit précédemment, le contrôle de la trajectoire d'un élément mobile, c'est-à-dire l'asservissement de ses éléments mécaniques, est avantageusement effectué par un module de pilotage de commande, mettant de préférence en œuvre un régulateur de type PID, associé à la surface de captation utilisée. Selon un mode de réalisation particulier, des commandes sont adressées aux éléments mobiles devant se déplacer plusieurs dizaines de fois par seconde.

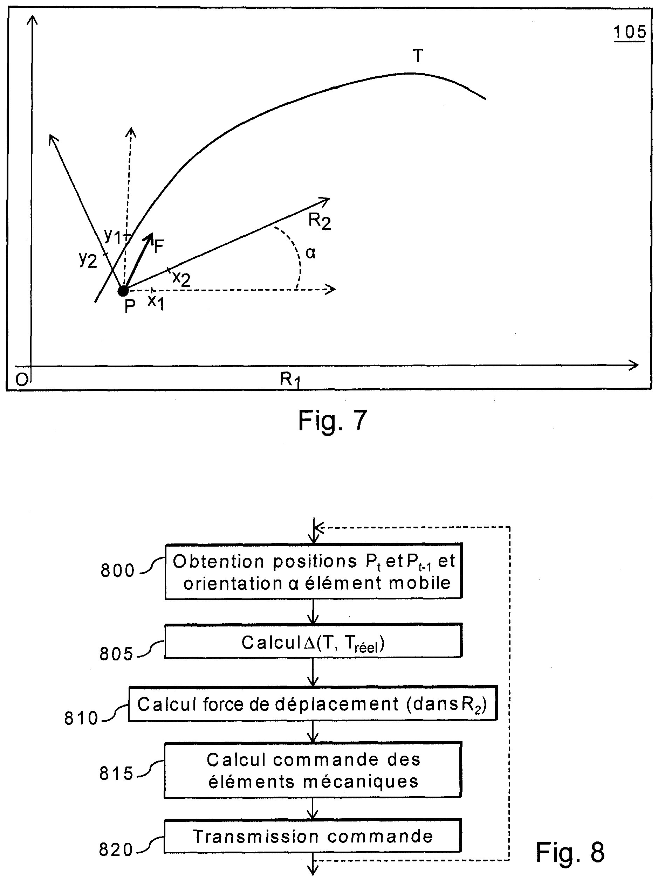

La figure 7 illustre un exemple de trajectoire suivie par un élément mobile sur une surface de captation.

Comme illustré, un élément mobile placé à une position P d'un plateau 105 doit suivre ici une trajectoire T prédéfinie ou calculée dynamiquement par l'application mettant en œuvre la surface de captation et un ou plusieurs éléments mobiles.

Un repère $R_1$ *O,i,j,* de préférence orthonormé, est associé à la surface de captation (e.g. plateau 105) et un repère $R_2$ *P,u,v*, également de préférence orthonormé, est associé à l'élément mobile considéré. L'angle formé entre les vecteurs *i* et *u* est noté α.

L'élément mobile considéré génère ici une force de déplacement *F* ayant pour coordonnées ($x_1$, $y_1$) dans le repère $R_1$ et ($x_2$, $y_2$) dans le repère $R_2$.

Selon un mode de réalisation particulier, la surface de captation détermine en temps réel la position P et l'orientation α (à une constante près) de l'élément mobile considéré, par exemple 50 fois par secondes (temps de cycle de 20 millisecondes). La position P et cette rotation α sont exprimées dans le repère $R_1$ (repère associé à la surface de captation).

Ces données sont transmises au système informatique utilisé, par exemple un ordinateur portable de type PC, un téléphone intelligent (*smartphone*) ou une tablette branchée sur un port de communication de la surface de captation.

Le système informatique utilisé traite les données reçues afin de les comparer à une trajectoire données et générer des commandes qui sont transmises à l'élément mobile considéré afin de contrôler ses éléments mécaniques (typiquement de type vibreur).

A ces fins, le système informatique exécute un module logiciel qui compare la trajectoire T que doit suivre l'objet mobile, exprimée dans le repère $R_1$, avec la position P et l'orientation α, également exprimées dans le repère $R_1$. Il calcul ainsi l'erreur entre la position actuelle de l'objet mobile et la position souhaitée sur la trajectoire T.

L'utilisation d'un algorithme d'asservissement standard permet au module logiciel du système informatique de calculer une commande qui est transmise à l'élément mobile considéré et qui permet de générer une force F de déplacement.

Les éléments mécaniques utilisés pour générer une force de déplacement au sein d'un élément mobile étant rigidement liés à celui-ci, les coordonnées de la force F de déplacement sont, après avoir été calculées dans le repère $R_1$ lié à la surface de captation ($x_1$, $y_1$), exprimées dans le repère $R_2$ lié à l'élément mobile ($x_2$, $y_2$) à l'aide de l'orientation α selon les relations suivantes :

$$x_2 = x_1 . \cos \alpha \; + \; y_1 . \sin(\alpha)$$

$$y_2 = y_1 . \cos \alpha \; - \; x_1 . \sin \alpha$$

La figure 8 illustre schématiquement certaines étapes mises en œuvre par un module logiciel d'un système informatique relié à la surface de captation pour commander une force de déplacement d'un élément mobile.

Une première étape (étape 800) consiste ici à obtenir la position courante $P_t$, une position précédente $P_{t-1}$ et l'orientation $\alpha$ de l'élément mobile considéré dans un repère lié à la surface de captation ($R_1$). La position $P_t$ est ici obtenue par l'activation de l'élément mobile qui émet un champ électromagnétique comme décrit précédemment. Elle est avantageusement mémorisée pour être utilisée ultérieurement comme position précédente.

Dans une étape suivante (étape 805), la différence entre la trajectoire désirée (trajectoire prédéterminée ou trajectoire déterminée dynamiquement) et la trajectoire réelle représentée par la position et la variation de positions entre l'instant courant et un instant précédent est calculée. Cette différence de trajectoire est alors utilisée pour calculer (étape 810) un déplacement et donc une force de déplacement dans un repère lié à l'élément mobile ($R_2$), selon l'orientation $\alpha$, qui est utilisée pour calculer (étape 815) une commande des éléments mécaniques (e.g. vibreurs) de l'élément mobile à l'aide d'un régulateur de type PID.

La commande calculée est alors transmise à l'élément mobile pour être appliquée aux éléments mécaniques (étape 820).

Comme représenté à l'aide de traits pointillés, les étapes 800 à 820 sont répétées tant que nécessaire.

Il est observé ici que si les étapes décrites en référence à la figure 8 sont ici mises en œuvre dans un module logiciel d'un système informatique relié à la surface de captation, elles peuvent, alternativement, être mises en œuvre, au moins partiellement, dans des éléments mobiles.

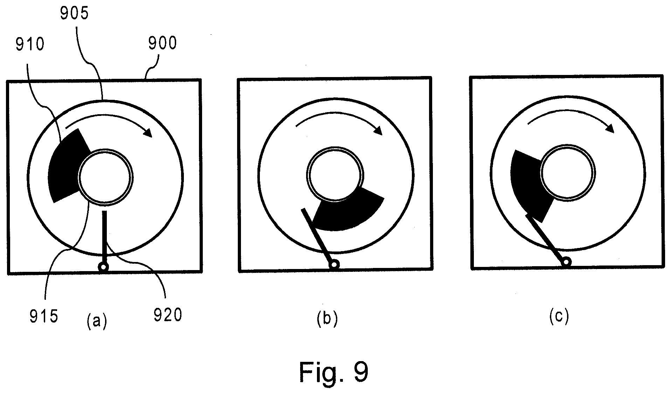

La figure 9, comprenant les figures 9a à 9c, représente un élément mécanique de type vibreur pouvant être intégré à un élément mobile et comprenant un moteur, une masselotte désaxée entraînée par le moteur et une butée verticale élastique et/ou mobile.

Comme illustré, l'élément mécanique 900 comprend un moteur 905 dont la vitesse de rotation et, de préférence, le sens de rotation peuvent être commandés. Une masselotte 910 est montée de façon désaxée sur l'arbre 915 du moteur. Alternativement, la masselotte 910 peut être montée, de façon désaxée, sur un arbre entraîné par celui du moteur. L'élément mécanique 900 comprend en outre une butée verticale 920 dont une extrémité est fixée de façon mobile à l'élément mécanique et l'autre extrémité peut être percutée par la masselotte 910 lors de sa rotation.

Alternativement, ou de façon complémentaire, la butée verticale 920 est élastique. Dans ce cas, elle peut être fixée de façon rigide à l'élément mécanique 900.

Ainsi, une butée verticale élastique et/ou mobile est placée sur le chemin de la masselotte de telle sorte qu'elle soit percutée à chaque tour.

La figure 9a illustre une position de la masselotte entre deux impacts sur la butée verticale tandis que les figues 9b et 9c illustrent une position de la masselotte en début et en fin d'impact, respectivement.

Il est observé ici que la nature et l'état du contact entre la surface de captation et l'élément mobile, formant une force de frottement statique lorsque l'élément mobile est immobile par rapport à la surface de captation et dynamique lors du déplacement de l'élément mobile, ont une influence directe sur la force de déplacement nécessaire à la création et à l'entretien du mouvement de l'élément mobile.

Ainsi, la force instantanée produite au moment des impacts de la masselotte sur la butée verticale et le vecteur de force instantané produit par la masselotte sur le système constitué par le reste de l'élément mobile (hors moments de l'impact de la masselotte sur la butée verticale) doivent être déterminés en fonction de la force de frottement (statique puis dynamique) entre la surface de captation et l'élément mobile.

Pour créer un mouvement, le vecteur de force instantané produit par la masselotte sur l'élément mobile, hors moments d'impact de la masselotte sur la butée verticale, selon des axes parallèles à la surface de contact, doit rester inférieur à la force de frottement de l'élément mobile sur la surface de captation alors que la force instantanée produite au moment des impacts de la masselotte sur la butée verticale doit dépasser cette force de frottement qui s'oppose au mouvement de l'élément mobile.

Un couple, de préférence sensiblement constant, est appliqué ici par le moteur sur son axe et entraîne la masselotte avec une accélération sensiblement constante. En raison des frottements statiques entre l'élément mobile et la surface de captation, l'élément mobile ne bouge pas (par rapport à la surface de captation) pendant l'essentiel de la rotation de la masselotte.

Juste avant l'impact entre la masselotte et la butée verticale élastique et/ou mobile, l'élément mobile a emmagasiné, dans la masselotte, une quantité de mouvement (comme indiqué par la flèche sur la figure 9a) sans que l'élément mobile ne se soit déplacé pour autant.

Du fait de la conservation de la quantité de mouvements de l'élément mobile, ce dernier a tendance à se déplacer vers la gauche lors de l'impact de la masselotte avec la butée verticale élastique et/ou mobile entraînant le ralentissement brutal de la masselotte par la butée. Si les paramètres en jeu, notamment la vitesse de rotation du moteur, la masse de la masselotte et la résistance de la butée verticale à l'impact de la masselotte, sont ajustés pour que la force générée par l'impact de la masselotte sur la butée verticale soit supérieure à la force de frottement statique, l'élément mobile se déplace vers la gauche.

En inversant le sens de rotation de la masselotte, l'élément mobile se déplace vers la droite.

En intégrant dans un élément mobile plusieurs éléments mécaniques de type vibreur tel que celui décrit en référence à la figure 9, ayant de préférence des axes de rotation horizontaux et perpendiculaires entre eux, l'élément mobile peux être dirigé dans toutes les directions en modulant la vitesse relative et en contrôlant le sens de rotation des moteurs.

Alternativement, ou de façon complémentaire, la rotation du moteur peut être contrôlée de telle sorte que l'accélération positive ou négative de son arbre, durant une période de temps inférieure à celle de révolution du moteur, créée une quantité de mouvements non nulle et donc une force de déplacement.

Il est observé ici que si des éléments mécaniques tels que ceux décrits en référence à la figure 9 peuvent être utilisés pour déplacer un élément mobile, ils peuvent également être utilisés pour provoquer des effets particuliers, par exemple des effets de soubresauts. A ces fins, il est notamment possible d'utiliser une butée horizontale élastique et/ou mobile. La mise en œuvre d'une butée oblique élastique et/ou mobile permet de combiner un déplacement d'un élément mobile avec un effet particulier de déplacement tel que des soubresauts.

Alors que des éléments mécaniques de type vibreur intégrés dans des éléments mobiles permettent le déplacement de ces derniers, ils peuvent également être utilisés pour générer des accélérations et/ou des vibrations lorsqu'un joueur tient l'élément mobile dans sa main.

La position et l'orientation de l'élément mobile étant connues en temps réel lorsqu'il est à proximité de la surface de captation, il est alors possible non seulement de déclencher un effet de vibration mais aussi de générer une accélération (donc une force) dans une direction souhaitée, c'est-à-dire une force haptique dirigée dans une direction particulière selon un repère lié à la surface de captation.

Il est rappelé qu'aujourd'hui, les dispositifs de type joystick ou manette sont généralement équipés de vibreurs mais que ceux-ci ne sont pas directionnels. L'effet produit est une simple vibration simulant, par exemple, l'action de rouler en véhicule sur du gravier ou de toucher une balle de tennis.

A titre d'illustration, il est supposé ici que l'élément mobile est utilisé pour diriger un personnage dans un jeu vidéo 2D ou 3D. Si le personnage est touché par un tir selon une certaine direction, il est alors possible de faire ressentir au joueur la direction d'où provient le tir.

A ces fins, un premier repère $R_1$ $O,i,j$, de préférence orthonormé, est associé à la surface de captation (e.g. plateau 105) et un second repère $R_2$ $P,u,v$, également de préférence orthonormé, est associé à l'élément mobile considéré. L'angle formé entre les vecteurs $i$ et $u$ est noté $\alpha$. La valeur de l'angle $\alpha$ est obtenue en temps réel, typiquement à l'aide de l'algorithme décrit précédemment pour obtenir la position et l'orientation d'un élément mobile.

Il est admis ici que la force $F$ devant être générée dans l'élément mobile considéré a les coordonnées $(x_1, y_1)$ dans le repère $R_1$ et les coordonnées $(x_2, y_2)$ dans

le repère $R_2$. Les coordonnées de la force $F$ dans le repère $R_2$ peuvent donc s'exprimer selon la forme suivante :

$$x_2 = x_1.\cos\alpha + y_1.\sin(\alpha)$$

$$y_2 = y_1.\cos\alpha - x_1.\sin\alpha$$

Ainsi, à partir des coordonnées de la force $F$ dans le repère lié à la surface de captation, déterminées par l'application mise en œuvre en lien avec cette dernière, il est possible de calculer en temps réel ses coordonnées dans le repère de l'élément mobile. Lorsque ces dernières ont été calculées, il convient de commander, de façon correspondante, les éléments mécaniques de type vibreur de l'élément mobile (comprenant typiquement deux ou quatre vibreurs tels que celui décrit en référence à la figure 9). La force devant être générée dans l'élément mobile est asservie à la position de l'élément mobile. A ces fins, elle est calculée en temps réel selon la position de l'élément mobile.

Naturellement, pour satisfaire des besoins spécifiques, une personne compétente dans le domaine de l'invention pourra appliquer des modifications dans la description précédente. En particulier, si l'invention est, aux fins d'illustration, décrite, en particulier, en référence au protocole RFID, l'invention n'est pas limitée à la mise en œuvre de celui-ci.

**Revendications**

1. Dispositif pour générer et asservir une force de déplacement d'un élément mobile dont la position et l'orientation sont déterminées en temps réel, ce dispositif comprenant les moyens suivants,

- moyens pour générer (535) au moins une force de déplacement, lesdits moyens pour générer au moins une force de déplacement pouvant être contrôlés pour générer une force selon plusieurs directions différentes ;
- moyens de réception (505, 520) d'un signal radioélectrique ;
- moyens d'émission (515) d'un signal électromagnétique, ledit signal électromagnétique étant émis en réponse à un signal d'activation et permettant la localisation en temps réel d'un élément mobile comprenant ledit dispositif ;
- moyens de contrôle (510) connectés auxdits moyens de réception et auxdits moyens d'émission d'un signal électromagnétique, lesdits moyens de contrôle étant configurés pour

    ◦ commander lesdits moyens pour générer au moins une force de déplacement en réponse à une information de commande d'un signal radioélectrique reçu et

◦ générer un signal d'activation en réponse à une information de synchronisation d'un signal radioélectrique reçu,

selon lequel lesdits moyens pour générer au moins une force de déplacement comprennent des éléments mécaniques de type vibreur,

selon lequel lesdits éléments mécaniques comprennent au moins un moteur (905) et au moins une masselotte désaxée (910) entraînée, de façon directe ou indirecte, par ledit au moins un moteur,

ledit dispositif comprenant en outre au moins une butée verticale (920) fixée de façon mobile aux éléments mécaniques ou une butée verticale (920) élastique fixée de façon rigide et/ou mobile aux éléments mécaniques, ladite au moins une butée étant montée de telle sorte à ce qu'elle soit percutée par ladite au moins une masselotte à chaque révolution de ladite au moins une masselotte.

2. Dispositif selon la revendication 1 selon lequel ledit au moins un moteur a un arbre de rotation sensiblement perpendiculaire à un plan de déplacement dudit dispositif.

3. Dispositif selon l'une quelconque des revendications 1 à 2 comprenant deux ou quatre éléments mécaniques de type vibreur.

4. Dispositif selon l'une quelconque des revendications 1 à 3 selon lequel lesdits moyens de réception d'un signal radioélectrique comprennent une mémoire double-port, ladite mémoire double-port étant configurée pour être accessible en lecture et/ou en écriture par un signal radioélectrique et par lesdits moyens de contrôle.

5. Dispositif selon l'une quelconque des revendications 1 à 4 selon lequel lesdits moyens de réception d'un signal radioélectrique comprennent des moyens d'identification d'une information de synchronisation et/ou d'une information de commande à partir d'un signal radioélectrique reçu et des moyens de transmission d'une information de synchronisation et/ou d'une information de commande identifiées auxdits moyens de contrôle.

6. Dispositif selon la revendication 4 selon lequel lesdits moyens de contrôle comprennent des moyens d'accès à une valeur mémorisée dans ladite mémoire double-port, une information de synchronisation et/ou de commande étant identifiée en fonction d'une valeur mémorisée dans ladite mémoire double-port.

7. Dispositif selon l'une quelconque des revendications précédentes selon lequel lesdits moyens de réception d'un signal radioélectrique sont conformes à un standard de type RFID.

8. Système pour asservir une force de déplacement d'un élément mobile dont la position et l'orientation sont déterminées en temps réel, ce système étant **caractérisé en ce qu'**il comprend les moyens suivants :

- au moins un élément mobile comprenant un dispositif pour générer et asservir une force de déplacement d'un élément mobile selon l'une quelconque des revendications 1 à 7 ; et
- une surface de captation comprenant :

◦ des moyens de pilotage de détection de position pour activer séquentiellement des émissions électromagnétiques d'éléments mobiles ;
◦ des moyens de localisation d'un signal électromagnétique ; et
◦ des moyens de pilotage de commande pour émettre des informations de commande permettant de contrôler lesdits moyens pour générer au moins une force de déplacement dudit dispositif dudit au moins un élément mobile.

9. Système selon la revendication 10 selon lequel ladite au moins une force de déplacement dudit dispositif dudit au moins un élément mobile est déterminée en réponse à des informations de localisation dudit au moins un élément mobile déterminées par lesdits moyens de localisation.

10. Système selon la revendication 8 ou la revendication 9 selon lequel lesdits moyens de pilotage de commande comprennent des moyens pour calculer une erreur entre une trajectoire réelle dudit au moins un élément mobile et une trajectoire désirée dudit au moins un élément mobile.

11. Système selon l'une quelconque des revendications 8 à 10 selon lequel lesdits moyens de pilotage de commande comprennent un régulateur de type PID.


**Patentansprüche**

1. Vorrichtung zum Erzeugen und Regeln einer Kraft zum Bewegen eines beweglichen Elements, dessen Position und Ausrichtung in Echtzeit bestimmt werden, wobei diese Vorrichtung die folgenden Mittel enthält:

- Mittel (535) zum Erzeugen von zumindest einer Bewegungskraft, wobei die Mittel zum Erzeugen von zumindest einer Bewegungskraft steuerbar sind, um eine Kraft in mehreren verschiedenen Richtungen zu erzeugen;
- Mittel (505, 520) zum Empfangen eines Funksignals;
- Mittel (515) zum Aussenden eines elektromagnetischen Signals, wobei das elektromagnetische Signal als Reaktion auf ein Aktivierungssignal ausgesendet wird und die Echtzeitortung eines die Vorrichtung enthaltenden beweglichen Elements ermöglicht;
- Kontrollmittel (510), die mit den Empfangsmitteln und mit den Mitteln zum Aussenden eines elektromagnetischen Signals verbunden sind, wobei die Kontrollmittel ausgelegt sind zum

• Steuern der Mittel zum Erzeugen von zumindest einer Bewegungskraft als Reaktion auf eine Steuerinformationen eines empfangenen Funksignals und
• Erzeugen eines Aktivierungssignals als Reaktion auf eine Synchronisationsinformation eines empfangenen Funksignals,

wobei die Mittel zum Erzeugen von zumindest einer Bewegungskraft mechanische Elemente vom Typ Vibriereinrichtung enthalten,
wobei die mechanischen Elemente zumindest einen Motor (905) und zumindest ein außermittiges Ausgleichsgewicht (910) enthalten, das direkt oder indirekt von dem zumindest einen Motor angetrieben wird,
wobei die Vorrichtung ferner zumindest einen vertikalen Anschlag (920), der beweglich an den mechanischen Elementen befestigt ist, oder einen elastischen vertikalen Anschlag (920) enthält, der starr und/oder beweglich an den mechanischen Elementen befestigt ist, wobei der zumindest eine Anschlag so angebracht ist, dass er bei jeder Umdrehung des zumindest einen Ausgleichsgewichts von dem zumindest einen Ausgleichsgewicht getroffen wird.

2. Vorrichtung nach Anspruch 1, wobei der zumindest eine Motor eine Drehwelle aufweist, die im Wesentlichen senkrecht zu einer Bewegungsebene der Vorrichtung verläuft.

3. Vorrichtung nach einem der Ansprüche 1 bis 2, enthaltend zwei oder vier mechanische Elemente vom Typ Vibriereinrichtung.

4. Vorrichtung nach einem der Ansprüche 1 bis 3, wobei die Mittel zum Empfangen eines Funksignals einen Dual-Port-Speicher enthalten, wobei der Dual-Port-Speicher dazu ausgelegt ist, um über ein Funksignal und über die Kontrollmittel ausgelesen und/oder beschrieben werden zu können.

5. Vorrichtung nach einem der Ansprüche 1 bis 4, wobei die Mittel zum Empfangen eines Funksignals Mittel zum Identifizieren einer Synchronisationsinformation und/oder einer Steuerinformationen ausgehend von einem empfangenen Funksignal und Mittel zum Übertragen einer identifizierten Synchronisationsinformation und/oder Steuerinformation an die Steuermittel enthalten.

6. Vorrichtung nach Anspruch 4, wobei die Kontrollmittel Mittel zum Zugriff auf einen in dem Dual-Port-Speicher gespeicherten Wert enthalten, wobei eine Synchronisations- und/oder Steuerinformation in Abhängigkeit von einem in dem Dual-Port-Speicher gespeicherten Wert identifiziert wird.

7. Vorrichtung nach einem der vorangehenden Ansprüche, wobei die Mittel zum Empfangen eines Funksignals einem RFID-Standard entsprechen.

8. System zum Regeln einer Kraft zum Bewegen eines beweglichen Elements, dessen Position und Ausrichtung in Echtzeit bestimmt werden, wobei dieses System **dadurch gekennzeichnet ist, dass** es die folgenden Mittel enthält:

- zumindest ein bewegliches Element, das eine Vorrichtung zum Erzeugen und Regeln einer Kraft zum Bewegen eines beweglichen Elements nach einem der Ansprüche 1 bis 7 enthält; und
- eine Sensorfläche mit:

• Steuermitteln zur Positionserfassung, um sequentiell elektromagnetische Emissionen von beweglichen Elementen zu aktivieren;
• Mitteln zum Lokalisieren eines elektromagnetischen Signals; und
• Steuerungsmitteln zum Aussenden von Steuerinformationen, die gestatten, die Mittel zum Erzeugen zumindest einer Kraft zum Bewegen der Vorrichtung des zumindest einen beweglichen Elements zu kontrollieren.

9. System nach Anspruch 10, wobei die zumindest eine Kraft zum Bewegen der Vorrichtung des zumindest einen beweglichen Elements als Reaktion auf Lokalisierungsinformationen des zumindest einen beweglichen Elements bestimmt wird, die von den Lokalisierungsmittel bestimmt werden.

10. System nach Anspruch 8 oder Anspruch 9, wobei die Steuerungsmittel Mittel zum Berechnen eines Fehlers zwischen einer tatsächlichen Trajektorie des zumindest einen beweglichen Elements und einer gewünschten Trajektorie des zumindest einen beweglichen Elements enthalten.

11. System nach einem der Ansprüche 8 bis 10, wobei die Steuerungsmittel einen PID-Regler enthalten.

**Claims**

1. A device for generating and automatically controlling a displacement force of a mobile entity of which the position and the orientation are determined in real time, this device comprising the following means,

   - means for generating (535) at least one displacement force, said means for generating at least one displacement force being able to be controlled to generate a force in several different directions;
   - reception means (505, 520) for receiving a radio-frequency signal;
   - emission means (515) for emitting an electromagnetic signal, said electromagnetic signal being emitted in response to an activation signal and enabling the real-time location of a mobile entity comprising said device;
   - control means (510) connected to said reception means and to said emission means for emitting an electromagnetic signal, said control means being configured for

      ◦ controlling said means to generate at least one displacement force in response to control information from a received radio-frequency signal and
      ◦ generating an activation signal in response to synchronization information from a received radio-frequency signal,

   wherein said means for generating at least one displacement force comprise mechanical parts of vibrator type wherein said mechanical parts comprise at least one motor (905) and at least one eccentric fly weight (910) which is driven, directly or indirectly, by said at least one motor, said device further comprising at least one vertical stop (920) movably fastened to the mechanical parts or an elastic vertical stop (920) rigidly and/or movably fastened to the mechanical parts, said at least one stop being mounted such that it is struck by said at least one fly weight at each revolution of said at least one fly weight.

2. A device according to claim 1 wherein said at least one motor has a rotation shaft substantially perpendicular to the plane of displacement of said device.

3. A device according to any one of claims 1 to 2 comprising two or four mechanical parts of vibrator type.

4. A device according to any one of claims 1 to 3 wherein said reception means for receiving a radio-frequency signal comprise a dual-port memory, said dual-port memory being configured to be accessible for reading and/or writing by a radio-frequency signal and by said control means.

5. A device according to any one of claims 1 to 4 wherein said receiving means for receiving a radio-frequency signal comprise identification means for identifying synchronization information and/or control information from a received radio-frequency signal and transmission means for transmitting identified synchronization information and/or identified control information to said control means.

6. A device according to claim 4 wherein said control means comprise means for accessing a value stored in said dual-port memory, synchronization and/or control information being identified according to a value stored in said dual-port memory.

7. A device according to any one of the preceding claims wherein said reception means for receiving a radio-frequency signal are in accordance with an RFID type standard.

8. A system for automatically controlling a displacement force of a mobile entity of which the position and the orientation are determined in real time, this system being **characterized in that** it comprises the following means:

   - at least one mobile entity comprising a device for generating and automatically controlling a displacement force of a mobile entity according to any one of claims 1 to 7; and
   - a sensing surface comprising:

      ◦ position detection driver means for sequentially activating electromagnetic emissions of mobile entities;
      ◦ location means for locating an electromagnetic signal; and
      ◦ control driver means for emitting control information making it possible to control said means for generating at least one displacement force of said device of said at least one mobile entity.

9. A system according to claim 10 wherein said at least one displacement force of said device of said at least one mobile entity is determined in response to location information of said at least one mobile entity determined by said location means.

10. A system according to claim 8 or claim 9 wherein said control driver means comprise means for computing an error between a real path of said at least one mobile entity and a desired path of said at least one mobile entity.

11. A system according to any one of claims 8 to 10 wherein said control driver means comprise a PID type controller.

Fig. 1

Fig. 3

Fig. 4

EP 2 983 802 B1

EP 2 983 802 B1

**Fig. 2**

Fig. 5

Fig. 6a

Fig. 6b

Fig. 7

800 — Obtention positions $P_t$ et $P_{t-1}$ et orientation α élément mobile

805 — Calcul Δ(T, $T_{réel}$)

810 — Calcul force de déplacement (dans $R_2$)

815 — Calcul commande des éléments mécaniques

820 — Transmission commande

Fig. 8

Fig. 9

**EP 2 983 802 B1**

## RÉFÉRENCES CITÉES DANS LA DESCRIPTION

**Documents brevets cités dans la description**

- US 2004164696 A
- US 2011076916 A
- US 2008238885 A
- WO 2012028827 A